# EUROPÄISCHE PATENTSCHRIFT

(11) **EP 2 338 750 B1**
(45) Veröffentlichungstag und Bekanntmachung des Hinweises auf die Patenterteilung: **03.04.2013**
(21) Anmeldenummer: 10171591.0
(22) Anmeldetag: 02.08.2010
(51) Int. Cl.: B60T 13/66, B60T 17/04, B60T 8/36

(54) **Magnetventil sowie Fahrerassistenzeinrichtung**
Magnetic valve and driver assistance device
Soupape magnétique et dispositif d'assistance au conducteur

(30) Priorität: 22.12.2009 DE 102009055172
(43) Veröffentlichungstag der Anmeldung: 29.06.2011
(73) Patentinhaber: Robert Bosch GmbH, 70442 Stuttgart (DE)
(72) Erfinder: Godbillon, Pascal, 74074, Heilbronn (DE)

(56) Entgegenhaltungen:
- EP-A1- 0 196 273
- EP-A2- 1 363 057
- WO-A1-93/08055
- DE-A1- 4 132 471
- DE-A1- 4 234 749
- DE-A1- 19 530 899
- DE-A1- 19 533 400
- DE-A1- 19 751 240
- DE-A1-102006 047 918
- DE-A1-102006 047 920
- DE-A1-102008 020 855

## Beschreibung

Die Erfindung betrifft ein Magnetventil mit einem Magnetanker, der mit einem Dichtelement des Magnetventils zu dessen Verlagerung wirkverbunden ist, und einem Ankergegenstück, welches zumindest bereichsweise in eine Aufnahmeöffnung des Magnetankers eingreift.

### Stand der Technik

Magnetventile der eingangs genannten Art sind aus dem Stand der Technik bekannt. Sie werden beispielsweise für Fahrerassistenzeinrichtungen, also insbesondere im Zusammenhang mit ABS-, TCS- oder ESP-Systemen, verwendet. Die Magnetventile sind beispielsweise als 2/2-Ventile ausgebildet, welche stromlos offen oder auch stromlos geschlossen sein können. In einem solchen Magnetventil ist üblicherweise das Dichtelement derart angeordnet, dass es in seiner axialen Richtung verlagert werden kann, um in einer Schließstellung mit einem Ventilsitz des Magnetventils dichtend zusammenzuwirken und so eine Fluiddurchgangsverbindung durch das Magnetventil zu unterbrechen. Wird das Dichtelement dagegen in eine Freigabestellung verlagert, so gibt es den Ventilsitz frei, sodass Fluid durch das Magnetventil hindurchströmen kann, die Fluiddurchgangsverbindung also hergestellt ist. Das Dichtelement wird mittels eines Magnetankers verlagert. Der Magnetanker ist dazu im Bereich mindestens einer Spule angeordnet. Ist die Spule stromlos, so befindet sich der Magnetanker in seiner Ausgangsstellung, wobei diese Ausgangsstellung die Schließstellung (stromlos geschlossenes Magnetventil) oder die Freigabestellung (stromlos geöffnetes Magnetventil) sein kann. Das Dichtelement ist dazu mit dem Magnetanker wirkverbunden, weist also beispielsweise eine starre Verbindung zu diesem auf.

Der Magnetanker bildet zusammen mit dem Ankergegenstück einen magnetischen Teil des Magnetventils. Der Magnetanker und das Ankergegenstück sind dabei derart zueinander angeordnet, dass die Stirnflächen der beiden Elemente einander zugewandt sind. Beispielsweise sind der Magnetanker und das Ankergegenstück derart ausgerichtet, dass eine jeweilige Längsachse koaxial oder parallel zu einer Längsachse des Magnetventils verläuft. Das Ankergegenstück kann der Spule des Magnetventils zugeordnet sein.

Aus dem Stand der Technik ist es bekannt, dass die Stirnflächen von Magnetanker und Ankergegenstück plan ausgebildet sind und dabei im Wesentlichen parallel zueinander verlaufen. Es ist jedoch auch bekannt, entweder den Magnetanker oder das Ankergegenstück mit einer Aufnahmeöffnung zu versehen, wobei das jeweils andere Element zumindest bereichsweise in diese Aufnahmeöffnung eingreift. Es kann also beispielsweise vorgesehen sein, dass der Magnetanker die Aufnahmeöffnung aufweist und das Ankergegenstück in diese zumindest bereichsweise eingreift. Umgekehrt ist es natürlich ebenso möglich, dass das Ankergegenstück die Aufnahmeöffnung aufweist, wobei der Magnetanker zumindest bereichsweise in diese eingreift. Dabei ist es lediglich vorgesehen, dass das zumindest bereichsweise Eingreifen in zumindest einer Stellung des Magnetankers beziehungsweise des Dichtelements gewährleistet ist. Demnach kann es auch vorgesehen sein, dass das Ankergegenstück in zumindest einer Stellung vollständig außerhalb der Aufnahmeöffnung des Magnetankers angeordnet ist. Durch die Aufnahmeöffnung des Magnetankers und das in diese eingreifende Ankergegenstück (beziehungsweise die Aufnahmeöffnung des Ankergegenstücks mit dem zumindest bereichsweise darin angeordneten Magnetanker), das heißt das Ineinandergreifen von Magnetanker und Ankergegenstück, ist eine so genannte Tauchstufe ausgebildet.

Generell sind aus dem Stand der Technik die DE 195 33 400 A1 und die EP 0 196 273 A1 bekannt. Erstere zeigt eine elektromagnetisch steuerbare Ventilanordnung, bei welcher ein bewegliches, magnetisch wirksames Element als ein zweiter Anker ausgebildet ist, der einen Anker eines Hilfsverschlussstückes wenigstens auf einem Teil von dessen Länge umgibt und starr mit einem Hauptverschlussstück verbunden ist. Beiden Ankern soll ein unbeweglich in einem Elektromagnet angeordneter Polkern gemeinsam zugeordnet sein. Aus der EP 0 196 273 A1 ist zudem ein Magnetventil mit mehreren Durchströmungswegen bekannt.

Aus dem Stand der Technik ist es auch bekannt, die Tauchstufe als Einfachtauchstufe oder als Doppeltauchstufe beziehungsweise Mehrfachtauchstufe auszuführen. In ersterem Fall weist die Aufnahmeöffnung über ihre Axialerstreckung zumindest in dem das Ankergegenstück aufnehmenden Bereich konstante Abmessungen auf. Dagegen ist es bei der Doppeltauchstufe vorgesehen, die Aufnahmeöffnung über ihre Axialerstreckung hinweg mit zwei unterschiedlichen Abmessungen auszubilden, wobei das Ankergegenstück jeweils auf diese Abmessungen abgestimmt ist, also ebenfalls mit unterschiedlichen Abmessungen vorliegt. Selbstverständlich ist es auch möglich, eine Mehrfachtauchstufe mit einer beliebigen Anzahl von Abstufungen der Abmessungen auszubilden.

Bei der Anordnung des Ankergegenstücks in der Aufnahmeöffnung des Magnetankers dürfen sich Ankergegenstück und Magnetanker in radialer Richtung nicht berühren. Daher ist zwischen den beiden Elementen ein Radialspalt ausgebildet, der beispielsweise als Ringspalt vorliegt. Aus diesem Grund ist bei einer solchen Tauchstufe eine genaue Führung des Magnetankers zu gewährleisten. Dies führt üblicherweise zu hohen Toleranzanforderungen an viele Teile des Magnetventils, insbesondere an den Magnetanker und das Ankergegenstück sowie eine Führung beziehungsweise Lagerung des Magnetankers in dem Magnetventil. Aus diesem Grund ist die Herstellung eines solchen Magnetventils vergleichsweise aufwendig und damit kostenintensiv.

### Offenbarung der Erfindung

Demgegenüber weist das Magnetventil mit den in Anspruch 1 genannten Merkmalen den Vorteil auf, dass es einfacher und kostengünstiger herzustellen ist. Dazu ist erfindungsgemäß vorgesehen, dass das Ankergegenstück aus einem Polkern und einem auf dem Polkern aufgestützten Zwischenbauteil besteht, wobei lediglich das Zwischenbauteil zumindest bereichsweise in der Aufnahmeöffnung angeordnet ist. Es ist also eine mehrteilige, insbesondere zweiteilige, Ausführung des Ankergegenstücks vorgesehen. Auf diese Weise kann das Magnetventil mit einer Tauchstufe ausgestattet werden, wobei gleichzeitig eine einfache und kostengünstige Herstellung gewährleistet ist. Durch die Tauchstufe wird die Stellbarkeit des Magnetventils beziehungsweise des Magnetankers gegenüber einer Ausbildung von Magnetanker und Ankergegenstück mit planen Stirnflächen verbessert. Insbesondere wird dabei ein flacherer, linearerer Verlauf der Kennlinie des Magnetventils - in welcher die Stellkraft beziehungsweise Magnetkraft über eine Entfernung von Magnetanker zu Ankergegenstück aufgetragen ist - erzielt. Das Zwischenbauteil ist üblicherweise lediglich an den Polkern angelegt, also nicht fest mit diesem verbunden. Das Zwischenbauteil stützt sich demnach lediglich auf den Polkern auf beziehungsweise wird von dem Magnetanker oder einem diesem zugeordneten Federelement in Richtung des Polkerns gedrängt. Bei einer solchen Ausbildung des Ankergegenstücks aus Polkern und Zwischenbauteil ist es vorgesehen, dass der Polkern nicht in die Aufnahmeöffnung des Magnetankers eingreift. Vorteilhafterweise sind Polkern und Magnetanker voneinander beabstandet, sie können jedoch auch mit ihren Stirnflächen aneinander anliegen. In einer vorteilhaften Ausbildung des Magnetventils ist das Zwischenbauteil im Sinne einer Mehrfachtauchstufe ausgebildet, weist also in axialer Richtung mindestens zwei unterschiedliche Abmessungen auf. Beispielsweise kann ein dem Polkern zugewandter Bereich des Zwischenbauteils als Stützelement vorliegen, mit welchem sich das Zwischenbauteil auf dem Polkern aufstützt, und ein weiterer, dem Magnetanker zugewandter Bereich als Führungsvorrichtung, mit welcher beispielsweise eine Führung für ein Federelement, welches zwischen Zwischenbauteil und Magnetanker wirkt, ausgebildet ist. Bei dieser Ausführungsform kann die Kennlinie des Magnetventils auch gegenüber einem aus dem Stand der Technik bekannten Magnetventil mit Einfachtauchstufe verbessert werden. Grundsätzlich kann mit dem erfindungsgemäßen Magnetventil erreicht werden, dass eine große Anzahl an Gleichteilen zu anderen Magnetventilen vorliegt. Insbesondere bleiben dabei Teile- und Montagetoleranzen gegenüber Magnetventilen, bei welchen Magnetanker und Ankergegenstück lediglich plane Stirnflächen aufweisen, unverändert. Auf diese Weise liegt ein Kostenvorteil gegenüber Magnetventilen mit Einfach- oder Mehrfachtauchstufe vor, wobei eine bessere Stellbarkeit beziehungsweise eine optimierte Kennlinie erreicht ist. Die Stirnflächen von Magnetanker und Ankergegenstück werden üblicherweise auch als Polflächen bezeichnet. Besonders vorteilhaft ist es, wenn das Zwischenbauteil und der Polkern materialeinheitlich sind, also aus demselben Material bestehen.

Eine Weiterbildung der Erfindung sieht vor, dass der Magnetanker mittels einer Spule verlagerbar ist und das Ankergegenstück im Wesentlichen ortsfest in dem Magnetventil angeordnet ist. Das Magnetventil weist also die Spule auf, in dessen Bereich der Magnetanker angeordnet ist. Der Magnetanker ist dabei bezüglich weiteren Bereichen des Magnetventils, insbesondere des Ankergegenstücks, axial verlagerbar. Das Ankergegenstück ist beispielsweise der Spule des Magnetventils zugeordnet und dabei im Wesentlichen ortsfest angeordnet. Bei einer Verlagerung des Magnetankers erfolgt dies demnach im Wesentlichen bezüglich des Ankergegenstücks. Dabei liegt der Magnetanker in seiner Schließstellung beispielsweise beabstandet von dem Ankergegenstück vor, während in seiner Freigabestellung der Abstand zwischen Magnetanker und Ankergegenstück verringert ist beziehungsweise diese beiden Elemente mit ihren Stirnflächen aneinander anliegen.

Eine Weiterbildung der Erfindung sieht vor, dass das Zwischenbauteil in radialer Richtung von einer Innenwand der Aufnahmeöffnung beabstandet angeordnet ist. Für das Zwischenbauteil gilt demnach bei einer solchen Ausführungsform dasselbe wie für das gesamte Ankergegenstück bei Ausbildung einer Tauchstufe. Ein Berühren von Ankergegenstück und Magnetanker in radialer Richtung würde die Funktionsfähigkeit des Magnetventils beeinträchtigen, sodass ein solches vermieden werden soll. Das soll entsprechend auch für das Zwischenbauteil der Fall sein.

Eine Weiterbildung der Erfindung sieht vor, dass in der Aufnahmeöffnung ein Federelement vorgesehen ist. Das Federelement dient dabei insbesondere dazu, den Magnetanker in Richtung seiner Ausgangsstellung zu drängen. Das Federelement bewirkt dabei eine entsprechende Federkraft, welche sowohl auf das Ankergegenstück als auch den Magnetanker wirkt, um den Magnetanker in Richtung seiner Ausgangsstellung zu verlagern.

Eine Weiterbildung der Erfindung sieht vor, dass die Aufnahmeöffnung als Sacköffnung ausgebildet ist und sich das Federelement auf einem Grund der Sacköffnung aufstützt. Es ist also vorgesehen, dass die Aufnahmeöffnung den Magnetanker in axialer Richtung nicht vollständig durchgreift, sondern lediglich als Sacköffnung beziehungsweise Tasche vorliegt. Die Sacköffnung weist demnach den Grund auf, welcher sie in axialer Richtung des Magnetankers begrenzt. Auf diesem Grund stützt sich das Federelement zur Bewirkung der den Magnetanker in seine Ausgangsstellung drängenden Federkraft ab. Vorteilhafterweise ist dabei der Grund der Sacköffnung im Wesentlichen plan beziehungsweise auf das Federelement abgestimmt, sodass ein Verlagern beziehungsweise Verrutschen des Federelements innerhalb der Sacköffnung, insbesondere in radialer Richtung, verhindert wird.

Eine Weiterbildung der Erfindung sieht vor, dass das Federelement mit einer dem Ankergegenstück zugewandten Seite an dem Zwischenbauteil angreift. Das in der Aufnahmeöffnung des Magnetankers angeordnete Federelement stützt sich mit der Seite, welche dem Ankergegenstück zugewandt ist, an dem Zwischenbauteil ab. Dabei liegt es beispielsweise auf einer planen Fläche auf, welche dem Magnetanker beziehungsweise dem Grund der Sacköffnung zugewandt ist. Dabei ist es vorteilhaft, wenn diese Fläche und der Grund der Sacköffnung zumindest in Bereichen, in welchen sich das Federelement auf ihnen abstützt, im Wesentlichen parallel zueinander sind. Das Federelement ist also vorzugweise dazu vorgesehen, den Magnetanker von dem Zwischenbauteil und damit dem Ankergegenstück wegzudrängen. Die Federkraft des Federelements kann also eine Bewegung des Magnetankers bewirken, welche von dem Ankergegenstück fortgerichtet ist.

Eine Weiterbildung der Erfindung sieht vor, dass der Polkern und das Zwischenbauteil jeweils eine plane Stützfläche aufweisen, wobei die Stützflächen aneinander anliegen. Die Stützfläche des Zwischenbauteils ist dabei vorzugsweise an dem Stützelement vorgesehen. Die planen Stützflächen von Polkern und Zwischenbauteil dienen dazu, dass eine flächige Verbindung zwischen ihnen gegeben ist, sobald das Zwischenbauteil sich an dem Polkern aufstützt. Dieses Aufstützen wird insbesondere durch das Federelement beziehungsweise der von diesem bewirkten Federkraft sichergestellt. Durch das Aufstützen von dem Zwischenbauteil auf dem Polkern wird der magnetische Fluss innerhalb des Ankergegenstücks nicht unterbrochen, sodass die eingangs erwähnte verbesserte Stellbarkeit im Sinne einer Tauchstufe durch das Eingreifen des Zwischenbauteils in die Aufnahmeöffnung realisiert ist.

Eine Weiterbildung der Erfindung sieht vor, dass das Zwischenbauteil eine Führungsvorrichtung für das Federelement aufweist. Um das Federelement insbesondere in radialer Richtung zu führen und ein Ausknicken des Federelements zu verhindern, ist die Führungsvorrichtung an dem Zwischenbauteil vorgesehen. Die Führungsvorrichtung kann dabei beispielsweise als Axialvorsprung ausgebildet sein, welche sich von dem Stützelement des Zwischenbauteils in Richtung des Magnetankers erstreckt. Idealerweise weisen dabei das Stützelement und die Führungsvorrichtung unterschiedliche Abmessungen in radialer Richtung auf, um so das Zwischenbauteil im Sinne einer Mehrfachtauchstufe auszubilden. Sind das Zwischenbauteil und die Aufnahmeöffnung rund beziehungsweise kreisrund, so weisen Stützelement und Führungsvorrichtung beispielsweise unterschiedliche Durchmesser auf. Wenn das Federelement als Spiralfeder vorliegt, so greift die Führungsvorrichtung vorteilhafterweise in einen Innenbereich dieser Spiralfeder ein, um diese in ihrer Axialrichtung abzustützen beziehungsweise zu stabilisieren.

Eine Weiterbildung der Erfindung sieht vor, dass der Polkern von dem Magnetanker beabstandet angeordnet ist oder Polkern und Magnetanker jeweils eine Stirnfläche aufweisen und der Magnetanker sich über die Stirnflächen an dem Polkern abstützen kann. Bevorzugt liegt der Magnetanker in axialer Richtung beabstandet von dem Polkern vor. Es kann jedoch auch vorgesehen sein, dass Polkern und Magnetkern aneinander anliegen, also in Berührkontakt stehen. Zu diesem Zweck weisen Polkern und Magnetanker die Stirnflächen auf, welche im Falle des Berührkontakts aneinander anliegen. Auf diese Weise ist der Magnetanker bezüglich des Polkerns abgestützt und sichergestellt, dass der Polkern nicht in die Aufnahmeöffnung hineingelangen kann.

Die Erfindung betrifft weiterhin eine Fahrerassistenzeinrichtung, insbesondere ABS-, TCS- oder ESP-Einrichtung, mit mindestens einem Magnetventil, insbesondere gemäß den vorstehenden Ausführungen, wobei das Magnetventil einen Magnetanker, der mit einem Dichtelement des Magnetventils zu dessen Verlagerung wirkverbunden ist, und ein Ankergegenstück aufweist, welches zumindest bereichsweise in eine Aufnahmeöffnung des Magnetankers eingreift. Dabei soll das Ankergegenstück aus einem Polkern und einem auf dem Polkern aufgestützten Zwischenbauteil bestehen, wobei lediglich das Zwischenbauteil zumindest bereichsweise in der Aufnahmeöffnung angeordnet ist. Durch die Verwendung eines solchen Magnetventils, insbesondere des vorstehend beschriebenen Magnetventils, kann die Fahrerassistenzeinrichtung preisgünstig realisiert werden und dennoch Magnetventile mit einer guten Stellbarkeit aufweisen. Die Fahrerassistenzeinrichtung kann eine Einrichtung sein, welche lediglich einer Bremsdruckerzeugung und/oder Bremsdruckmodulation dient. Zusätzlich kann es vorgesehen sein, dass die Fahrerassistenzeinrichtung ABS-, TCS- oder ESP-Funktionen ausführt.

Die Erfindung wird im Folgenden anhand der in der Zeichnung dargestellten Ausführungsbeispiele näher erläutert, ohne dass eine Beschränkung der Erfindung erfolgt. Es zeigen:
Figur 1 einen Querschnitt eines Magnetventils mit einem Magnetanker und einem Ankergegenstück, wobei das Ankergegenstück aus einem Polkern und einem Zwischenbauteil besteht, wobei letzteres in einer Aufnahmeöffnung des Magnetankers angeordnet ist, und
Figur 2 eine Detailansicht des in der Aufnahmeöffnung angeordneten Zwischenbauteils.

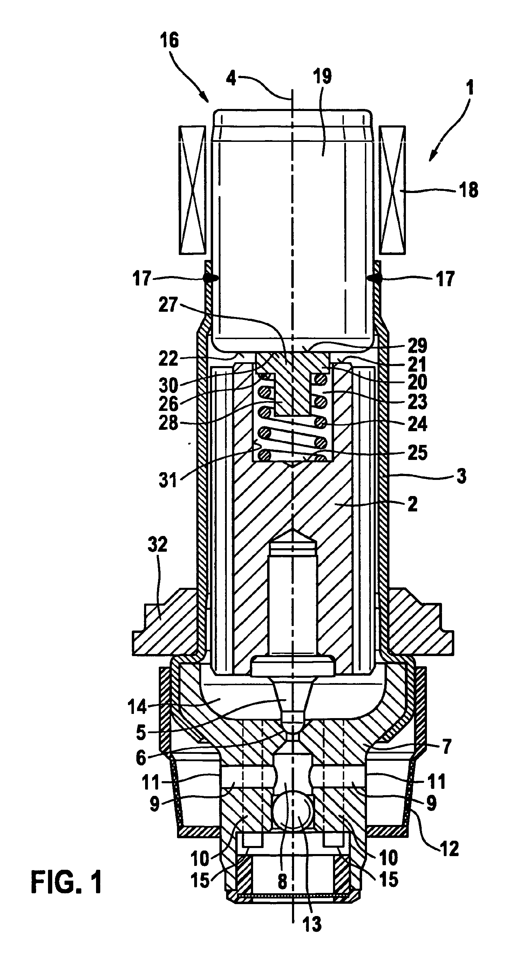

Die Figur 1 zeigt einen Querschnitt eines Magnetventils 1. Das Magnetventil 1 weist einen Magnetanker 2, welcher in einem Gehäuse 3 des Magnetventils 1 in axialer Richtung (Längsachse 4 des Magnetventils 1) verlagerbar gehalten ist. Der Magnetanker 2 dient zur Verlagerung eines Dichtelements 5, welches zu diesem Zweck mit dem Magnetanker 2 fest verbunden ist, beispielsweise indem es in den Magnetanker 2 eingeschraubt oder in diesen eingepresst ist. Das Dichtelement 5 wirkt mit einem Ventilsitz 6 zusammen, welches in einem Ventilkörper 7 ausgebildet ist. Der Ventilkörper 7 ist dabei zumindest bereichsweise von dem Gehäuse 3 umfangen und somit in Bezug auf dieses gehalten. In dem Ventilkörper 7 sind neben dem Ventilsitz 6 ein Steigkanal 8, mindestens ein Einlasskanal 9 und mindestens ein Auslasskanal 10 ausgebildet. Der Einlasskanal 9 verläuft in radialer Richtung und mündet in den Steigkanal 8 ein. Auf der dem Steigkanal 8 abgewandten Seite weist der Einlasskanal 9 einen Einlassanschluss 11 auf, welcher in einer Mantelfläche des Ventilkörpers 7 beziehungsweise des Magnetventils 1 ausgebildet ist.

Durch den Einlassanschluss 11 kann dem Magnetventil 1 ein Fluid zugeführt werden. Dieses durchläuft zuvor einen optional an dem Magnetventil 1 anbringbaren Filter 12. In dem hier dargestellten Beispiel sind vier Einlasskanäle 9 und ebenso viele Auslasskanäle 10 vorgesehen, wobei jeweils lediglich zwei dargestellt sind. Unterhalb der Einmündung der Einlasskanäle 9 in dem Steigkanal 8 ist dieser mittels eines Schließkörpers 13, welcher hier als Kugel ausgebildet ist, verschlossen. Somit ist sichergestellt, dass durch die Einlassanschlüsse 11 zugeführtes Fluid durch die Einlasskanäle 9 und den Steigkanal 8 in Richtung des Ventilsitzes 6 strömt. Die Auslasskanäle 10 stehen mit einem Fluidraum 14 des Magnetventils 1 in permanenter Fluidverbindung. Der Fluidraum 14 wird von dem Ventilkörper 7, dem Magnetanker 2 sowie dem Gehäuse 3 ausgebildet. In dem Fluidraum 14 ist der Ventilsitz 6 angeordnet. Der Fluidraum 14 wird von dem Dichtelement 5 zumindest bereichsweise durchgriffen. Auf ihrer dem Fluidraum 14 abgewandten Seite weisen die Auslasskanäle 10 jeweils einen Auslassanschluss 15 auf.

Auf der dem Fluidraum 14 beziehungsweise dem Ventilkörper 7 abgewandten Seite des Magnetankers 2 ist in dem Gehäuse 3 ein Ankergegenstück 16 vorgesehen. Dieses ist ortsfest in dem Gehäuse 3 gehalten, beispielsweise durch Klemmwirkung. Zusätzlich können, um eine dichte Verbindung zwischen Gehäuse 3 und Ankergegenstück 16 zu realisieren, Dichtelemente 17 vorgesehen sein. Der Magnetanker 2 und das Ankergegenstück 16 bilden zusammen mit mindestens einer nicht dargestellten Spule 18 einen magnetischen Teil des Magnetventils 1. Der Magnetanker 2 ist im Bereich der Spule 18 angeordnet. Alternativ ist es jedoch auch möglich, die Spule 18 derart anzuordnen, dass sowohl der Magnetanker 2 und das Ankergegenstück beziehungsweise lediglich das Ankergegenstück 16 im Bereich der Spule 18 angeordnet sind.

Das Ankergegenstück 16 setzt sich aus einem Polkern 19 und einem Zwischenbauteil 20 zusammen. Der Magnetanker 2 weist eine Stirnfläche 21 und der Polkern 19 eine Stirnfläche 22 auf, mit welcher sich der Magnetanker 2 an dem Polkern 19 abstützen kann. Die Stirnflächen 21 und 22 bilden also Kontakt- beziehungsweise Berührflächen zwischen Magnetanker 2 und Polkern 19. Der Magnetanker 2 weist eine Aufnahmeöffnung 23 auf, welche in der dem Ankergegenstück 16 beziehungsweise dem Polkern 19 zugewandten Stirnfläche 21 des Magnetankers 2 ausgebildet ist beziehungsweise diese durchgreift. Die Aufnahmeöffnung 23 weist in dem hier dargestellten Ausführungsbeispiel eine im Wesentlichen zylindrische Formgebung auf. Die Aufnahmeöffnung 23 kann jedoch auch in Richtung der Längsachse 4 unterschiedliche Abmessungen beziehungsweise - bei kreisrunder Ausbildung der Aufnahmeöffnung 23 - Durchmesser aufweisen. In der Aufnahmeöffnung 23 sind das Zwischenbauteil 20 sowie ein Federelement 24 zumindest bereichsweise angeordnet.

Das Federelement 24 ist in der hier dargestellten Ausführungsform als Spiralfeder ausgebildet und stützt sich auf einem Grund 25 der Aufnahmeöffnung 23 ab. Die Aufnahmeöffnung 23 ist dementsprechend als Sacköffnung ausgebildet. Auf der dem Ankergegenstück 16 beziehungsweise dem Grund 25 abgewandten Seite des Federelements 24 stützt sich dieses an dem Zwischenbauteil 20 ab. Dabei liegt das Federelement 24 auf einer Fläche 26 des Zwischenbauteils 20 an, welche als plane Ringfläche ausgebildet ist und im Wesentlichen parallel zu dem Grund 25 liegt. Das Zwischenbauteil 20 besteht aus einem Stützelement 27 und einer Führungsvorrichtung 28. Das Stützelement 27 ist dabei dem Polkern 19 zugewandt und weist eine plane Stützfläche 29 auf, welche mit einer ebenfalls planen Stützfläche 30 des Polkerns 19 zum Abstützen des Zwischenbauteils 20 zusammenwirkt. Das Zwischenbauteil 20 ist demnach lediglich auf dem Polkern 19 aufgestützt, es liegt also keine feste beziehungsweise starre Verbindung zwischen Polkern 19 und Zwischenbauteil 20 vor. Insbesondere ist keine formschlüssige, kraftschlüssige oder stoffschlüssige Verbindung vorgesehen.

Das Zwischenbauteil 20 liegt lediglich über die Stützflächen 29 und 30 auf dem Polkern 19 beziehungsweise dessen Stirnfläche 22 auf. Die Führungsvorrichtung 28 dient insbesondere einer Führung des Federelements 24. Zu diesem Zweck ist es im Wesentlichen dornförmig ausgebildet und greift in einen Innenbereich des als Spiralfeder ausgebildeten Federelements 24 ein. Somit ist das Federelement 24 sicher gegen ein Ausknicken beziehungsweise eine Verlagerung in radialer Richtung gesichert. Überdies kann das Zwischenbauteil 20 durch die unterschiedlichen Abmessungen des Stützelements 27 und der Führungsvorrichtung 28 im Sinne einer Tauchstufe ausgeführt sein.

Das Stützelement 27 weist eine Erstreckung in radialer Richtung derart auf, dass es in radialer Richtung von einer Innenwand 31 der Aufnahmeöffnung 23 beabstandet angeordnet ist. Die Führungsvorrichtung 28 weist kleinere Abmessungen auf. Vorteilhafterweise sind sowohl das Stützelement 27 als auch die Führungsvorrichtung 28 im Durchschnitt kreisrund, also zylinderförmig. Der Abstand zwischen den Stirnflächen 21 und 22 wird als Luftspalt beziehungsweise als Arbeitsluftspalt bezeichnet. Im Vergleich zu einem aus dem Stand der Technik bekannten Magnetventil weist das Magnetventil 1 mit dem Zwischenbauteil 20 den Vorteil auf, dass die Magnetkraft, welche mittels der Spule 18, dem Magnetanker 2 und dem Ankergegenstück 16 erzielbar ist, einen flacheren und damit gleichmäßigeren Verlauf über der Größe des Arbeitsluftspalts aufweist. Insbesondere fällt die Magnetkraft mit wachsendem Arbeitsluftspalt weniger stark ab als dies für das bekannte Magnetventil ohne Zwischenbauteil 20 der Fall ist. Durch die mehrteilige, insbesondere zweiteilige, Ausführung des Ankergegenstücks 16 aus Polkern 19 und Zwischenbauteil 20 wird demnach die Stellbarkeit des Magnetventils 1 deutlich verbessert.

Weiterhin können Magnetanker 2 und Ankergegenstück 16 mit einer einfachen Geometrie, wie hier dargestellt, ausgestaltet werden, was eine kostengünstige Fertigung des Magnetventils 1 ermöglicht. Dies gilt insbesondere im Vergleich zu Magnetventilen, welche ein einstückiges Ankergegenstück sowie eine Einfach-oder Doppeltauchstufe aufweisen. In der hier dargestellten Ausführungsform ist das Magnetventil 1 in einer lediglich ausschnittsweise dargestellten externen Einrichtung 32 klemmend gehalten.

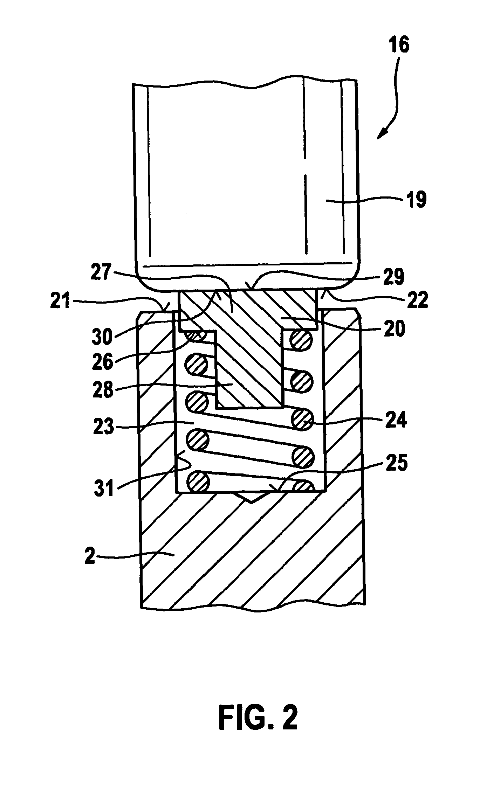

Die Figur 2 zeigt eine Detailansicht des aus Polkern 19 und Zwischenbauteil 20 bestehenden Ankergegenstücks 16 sowie des Magnetankers 2 mit der Aufnahmeöffnung 23. Die Ausbildung von Ankergegenstück 16 und Magnetanker 2 entspricht der vorstehend anhand der Figur 1 beschriebenen. Insofern sei auf die entsprechenden Ausführungen verwiesen.

## Patentansprüche

1. Magnetventil (1) mit einem Magnetanker (2), der mit einem Dichtelement (5) des Magnetventils (1) zu dessen Verlagerung wirkverbunden ist, einem Ankergegenstück (16), welches zumindest bereichsweise in eine Aufnahmeöffnung (23) des Magnetankers (2) eingreift und einem in der Aufnahmeöffnung (23) vorgesehenen Federelement (24), **dadurch gekennzeichnet, dass** das Ankergegenstück (16) aus einem Polkern (19) und einem auf dem Polkern (19) aufgestützten Zwischenbauteil (20) besteht, wobei lediglich das Zwischenbauteil (20) zumindest bereichsweise in der Aufnahmeöffnung (23) angeordnet ist und von dem Federelement (24) in Richtung des Polkerns (19) gedrängt wird.

2. Magnetventil nach Anspruch 1, **dadurch gekennzeichnet, dass** der Magnetanker (2) mittels einer Spule (18) verlagerbar ist und das Ankergegenstück (16) im Wesentlichen ortsfest in dem Magnetventil (1) angeordnet ist.

3. Magnetventil nach einem der vorhergehenden Ansprüche, **dadurch gekennzeichnet, dass** das Zwischenbauteil (20) in radialer Richtung von einer Innenwand (31) der Aufnahmeöffnung (23) beabstandet angeordnet ist.

4. Magnetventil nach einem der vorhergehenden Ansprüche, **dadurch gekennzeichnet, dass** die Aufnahmeöffnung (23) als Sacköffnung ausgebildet ist und sich das Federelement (24) auf einem Grund (25) der Sacköffnung aufstützt.

5. Magnetventil nach einem der vorhergehenden Ansprüche, **dadurch gekennzeichnet, dass** das Federelement (24) mit einer dem Ankergegenstück (16) zugewandten Seite an dem Zwischenbauteil (20) angreift.

6. Magnetventil nach einem der vorhergehenden Ansprüche, **dadurch gekennzeichnet, dass** der Polkern (19) und das Zwischenbauteil (20) jeweils eine plane Stützfläche (29,30) aufweisen, wobei die Stützflächen (29,30) aneinander anliegen.

7. Magnetventil nach einem der vorhergehenden Ansprüche, **dadurch gekennzeichnet, dass** das Zwischenbauteil (20) eine Führungsvorrichtung (28) für das Federelement (24) aufweist.

8. Magnetventil nach einem der vorhergehenden Ansprüche, **dadurch gekennzeichnet**, das der Polkern (19) von dem Magnetanker (2) beabstandet angeordnet ist oder Polkern (19) und Magnetanker (2) jeweils eine Stirnfläche (21,22) aufweisen und der Magnetanker (2) sich über die Stirnflächen (21,22) an dem Polkern (19) abstützen kann.

9. Fahrerassistenzeinrichtung, **gekennzeichnet durch** mindestens ein Magnetventil (1) nach einem oder mehreren der vorhergehenden Ansprüche.

## Claims

1. Solenoid valve (1) having a magnet armature (2) which is operatively connected to a sealing element (5) of the solenoid valve (1) in order to move the latter, an armature counterpiece (16) which engages at least in certain areas in a receptacle opening (23) in the magnet armature (2), and a spring element (24) provided in the receptacle opening (23), **characterized in that** the armature counterpiece (16) is composed of a pole core (19) and an intermediate component (20) which is supported on the pole core (19), wherein only the intermediate component (20) is arranged at least in certain areas in the receptacle opening (23) and is pushed in the direction of the pole core (19) by the spring element (24).

2. Solenoid valve according to Claim 1, **characterized in that** the magnet armature (2) can be moved by means of a coil (18), and the armature counterpiece (16) is arranged in a substantially positionally fixed fashion in the solenoid valve (1).

3. Solenoid valve according to one of the preceding claims, **characterized in that** the intermediate component (20) is arranged spaced apart in the radial direction from an inner wall (31) of the receptacle opening (23).

4. Solenoid valve according to one of the preceding claims, **characterized in that** the receptacle opening (23) is embodied as a blind opening and the spring element (24) is supported on a base (25) of the blind opening.

5. Solenoid valve according to one of the preceding claims, **characterized in that** the spring element (24) acts, with a side facing the armature counterpiece (16), on the intermediate component (20).

6. Solenoid valve according to one of the preceding claims, **characterized in that** the pole core (19) and the intermediate component (20) each have a planar supporting face (29, 30), wherein the supporting faces (29, 30) bear one against the other.

7. Solenoid valve according to one of the preceding claims, **characterized in that** the intermediate component (20) has a guide device (28) for the spring element (24).

8. Solenoid valve according to one of the preceding claims, **characterized in that** the pole core (19) is arranged spaced apart from the magnet armature (2), or the pole core (19) and the magnet armature (2) each have an end face (21, 22), and the magnet armature (2) can be supported on the pole core (19) by means of the end faces (21, 22).

9. Driver assistance device, **characterized by** at least one solenoid valve (1) according to one or more of the preceding claims.

## Revendications

1. Soupape magnétique (1) comprenant une armature magnétique (2), qui est en liaison fonctionnelle avec un élément d'étanchéité (5) de la soupape magnétique (1) en vue de son déplacement, une pièce conjuguée d'armature (16) qui vient en prise au moins en partie dans une ouverture de réception (23) de l'armature magnétique (2) et un élément de ressort (24) prévu dans l'ouverture de réception (23), **caractérisée en ce que** la pièce conjuguée d'armature (16) se compose d'un noyau polaire (19) et d'un composant intermédiaire (20) supporté sur le noyau polaire (19), seul le composant intermédiaire (20) étant disposé au moins en partie dans l'ouverture de réception (23) et étant déplacé par l'élément de ressort (24) dans la direction du noyau polaire (19).

2. Soupape magnétique selon la revendication 1, **caractérisée en ce que** l'armature magnétique (2) peut être déplacée au moyen d'une bobine (18) et la pièce conjuguée d'armature (16) est disposée essentiellement fixement dans la soupape magnétique (1).

3. Soupape magnétique selon l'une quelconque des revendications précédentes, **caractérisée en ce que** le composant intermédiaire (20) est disposé dans la direction radiale à distance d'une paroi intérieure (31) de l'ouverture de réception (23).

4. Soupape magnétique selon l'une quelconque des revendications précédentes, **caractérisée en ce que** l'ouverture de réception (23) est réalisée sous forme d'ouverture borgne et l'élément de ressort (24) s'appuie sur une base (25) de l'ouverture borgne.

5. Soupape magnétique selon l'une quelconque des revendications précédentes, **caractérisée en ce que** l'élément de ressort (24) vient en prise, avec un côté tourné vers la pièce conjuguée d'armature (16), sur le composant intermédiaire (20).

6. Soupape magnétique selon l'une quelconque des revendications précédentes, **caractérisée en ce que** le noyau polaire (19) et le composant intermédiaire (20) présentent chacun une surface de support plane (29, 30), les surfaces de support (29, 30) s'appliquant l'une contre l'autre.

7. Soupape magnétique selon l'une quelconque des revendications précédentes, **caractérisée en ce que** le composant intermédiaire (20) présente un dispositif de guidage (28) pour l'élément de ressort (24).

8. Soupape magnétique selon l'une quelconque des revendications précédentes, **caractérisée en ce que** le noyau polaire (19) est disposé à distance de l'armature magnétique (2) ou le noyau polaire (19) et l'armature magnétique (2) présentent chacun une surface frontale (21, 22) et l'armature magnétique (2) peut s'appuyer par le biais des surfaces frontales (21, 22) contre le noyau polaire (19).

9. Dispositif de direction assistée, **caractérisé par** au moins une soupape magnétique (1) selon l'une quelconque ou plusieurs des revendications précédentes.
